# EUROPÄISCHE PATENTSCHRIFT

(11) **EP 1 505 712 B1**
(45) Veröffentlichungstag und Bekanntmachung des Hinweises auf die Patenterteilung: **07.05.2008**
(21) Anmeldenummer: 04013562.6
(22) Anmeldetag: 09.06.2004
(51) Int. Cl.: H02K 11/00, H02K 29/08

(54) **Mehrphasige elektrische Maschine mit Drehlagesensor**
Multi-phase electric machine with rotational position sensor
Machine électrique polyphasée avec capteur pour déterminer la position de rotation

(30) Priorität: 05.08.2003 DE 10335895
(43) Veröffentlichungstag der Anmeldung: 09.02.2005
(73) Patentinhaber: ROBERT BOSCH GMBH, 70442 Stuttgart (DE)
(72) Erfinder: Reiter, Jochen, 71336 Waiblingen (DE); Rechberger, Klaus, 71638 Waiblingen (DE); Turgay, Barlas, 70794 Filderstadt (DE)

(56) Entgegenhaltungen:
- FR-A- 2 807 231
- US-A- 4 894 553
- US-A1- 2002 158 523
- PATENT ABSTRACTS OF JAPAN Bd. 012, Nr. 244 (E-631), 9. Juli 1988 (1988-07-09) -& JP 63 031459 A (SEIKO EPSON CORP), 10. Februar 1988 (1988-02-10)
- PATENT ABSTRACTS OF JAPAN Bd. 1999, Nr. 14, 22. Dezember 1999 (1999-12-22) -& JP 11 252887 A (AKEBONO BRAKE IND CO LTD), 17. September 1999 (1999-09-17)

## Beschreibung

### Stand der Technik

Die Erfindung betrifft eine mehrphasige elektrische Maschine, insbesondere einen Starter-Generator für Brennkraftmaschinen mit einem Drehlagesensor nach der Gattung des Anspruchs 1.

Elektrische Maschinen dieser Bauart werden zum Beispiel als Starter-Generator in Kraftfahrzeugen verwendet. Die elektrische Maschine wird dabei einerseits im Generatorbetrieb als Drehstromgenerator von der Brennkraftmaschine des Fahrzeugs angetrieben und die erzeugte Energie über eine Gleichrichter-Baueinheit dem Bordnetz des Fahrzeugs zugeführt. Andererseits wird die elektrische Maschine im Motorbetrieb über einen Wechselrichter vom Gleichstrom-Bordnetz versorgt und zum Starten der Brennkraftmaschine verwendet. Um die elektrische Maschine im Motorbetrieb aus einer beliebigen Ruhelage heraus in die vorgegebene Drehrichtung starten zu können, ist es zum Beispiel aus der FR 28 07 231 B1 bekannt, einen Drehlagesensor am vorderen Lagerflansch der Maschine zur Erfassung der Polstellung des Klauenpolläufers zu den drei Phasen seiner Statorwicklung anzuordnen, indem er die Ruhelage eines an der Riemenscheibe der Maschine befestigten Polringes abtastet, der über seinen Umfang mit einer der Zahl der Läuferpole entsprechenden Polzahl versehen ist. Der Lagesensor ist dabei mit drei um je 120° elektrisch zueinander versetzten HALL-Sensorelementen versehen, die auf Änderungen der Feldstärke einer senkrechten Komponente des am Polumfang vorhandenen magnetischen Wechselfeldes reagieren und dementsprechend über eine Schaltstufe, zum Beispiel einem Schmitt-Trigger jeweils ein High - oder Low-Signal abgeben.

Dabei ist nachteilig, dass die Sensorelemente und der Polring des Lagesensors vom Streufeld des Erregerfeldes im Klauenpolläufer beeinträchtigt werden, indem die Ausgangssignale der Sensorelemente hierdurch abhängig von der Stärke des Erregerstromes im Klauenpolläufer verzerrt werden.

Um die Signalverzerrung durch das Streufeld des Klauenpolläufers zu kompensieren, ist es aus der WO 01/69762 A1 bekannt, das Polrad über seinen Umfang mit einer unsymmetrischen Polteilung zu versehen. Das hat jedoch den Nachteil, dass die Kompensation nur für ein vorgegebenes konstantes Erregerfeld des Klauenpolläufers wirksam ist. Da jedoch insbesondere in der Anlaufphase der elektrischen Maschine sich die Stärke des Erregerfeldes stark ändert, ist der Einsatz derartiger Sensorausführungen bei Starter-Generatoren problematisch.

Mit der vorliegenden Lösung wird angestrebt, den Drehlagesensor mitsamt seinem Polring vom Streufeld des Läufers so zu entkoppeln, dass unabhängig von der Stärke des Erregerfeldes mit dem Einschalten der Versorgungsspannung eine Lageerfassung der Läuferpole gegenüber den Phasen der Statorwicklung erfolgt.

Ein weiteres Beispiel einer elektrische Maschine mit einem integrierten Sensor ist vom US 4,894,553 bekannt.

### Vorteile der Erfindung

Die erfindungsgemäße elektrische Maschine mit den kennzeichnenden Merkmalen des Anspruchs 1 hat den Vorteil, dass die Sensorelemente und der Polring nunmehr in einem vom magnetischen Streufeld des Läufers und gegebenenfalls anderer magnetischer Störfelder freien Raum angeordnet ist, so dass die von den Sensorelementen abgegebenen Signale ausschließlich von dem Magnetfeld des Polringes abhängig sind. Durch die Verwendung mehrerer Sensorelemente ergibt sich daraus als weiterer Vorteil die sofortige zuverlässige Erkennung der Drehlage der Läuferpole beim Einschalten der Versorgungsspannung (True Power On). Durch die Anordnung der Sensorelemente und des Polringes in der axialen Ausnehmung des Jochringes ergibt sich als weiterer Vorteil der Schutz dieser Teile vor mechanischer Beschädigung.

Durch die in den Unteransprüchen aufgeführten Maßnahmen ergeben sich vorteilhafte Ausgestaltungen und Weiterbildungen der im Hauptanspruch angegebenen Merkmale.

So ist es zur Erzielung möglichst steiler Änderungen der Magnetfeldstärke in den Sensorelementen bei einem Wechsel der Polarität durch den umlaufenden Polring vorteilhaft, wenn diese Sensorelemente radial ausgerichtet sind und wenn der Polring an einer axialen Wandung der Ausnehmung befestigt ist und radial magnetisierte Permanentmagnete mit gleicher Polteilung und abwechselnder Polarität aufweist. Bei einer elektrischen Maschine mit einer hohen Polzahl am Läufer ist es ferner zweckmäßig, den Polring mit der Ausbildung entsprechend vieler Pole an der äußeren axialen Wandung der Ausnehmung zu befestigen, wobei analog zur Dreiphasenwicklung der Maschine drei, vorzugsweise nebeneinander am Aufnehmer befestigte, um 120° elektrisch zueinander versetzte Sensorelemente dicht unterhalb der Innenseite des Polringes angeordnet sind. Zur Erzielung eindeutiger von der Drehlage abhängiger Sensorsignale in der Ruhelage der Maschine ist es besonders vorteilhaft, wenn die Sensorelemente von Magnetfeldänderungen abhängige Sensorelemente, vorzugsweise Absolut-HALL-Sensorelemente sind. Alternativ hierzu können auch Anisotrop-Magneto-Resistive (AMR) oder Giant-Magneto-Resistive (GMR) Sensoren verwendet werden.

Um an den Sensorelementen ein möglichst starkes magnetisches Nutzfeld zu bekommen, muss der magnetische Spalt für den Rückschluss zum Polrad möglichst gering sein. Zu diesem Zweck wird in Weiterbildung der Erfindung vorgeschlagen, die Höhe der axialen Ausnehmung am Jochring für den magnetischen Rückschluss so zu bemessen, dass der Aufnehmer mit den Sensorelementen dicht oberhalb der inneren axialen Wandung der Ausnehmung angeordnet ist. Dabei ist besonders zweckmäßig, wenn der hintere Teil einer auf die Läuferwelle aufsetzbaren Riemenscheibe als Jochring mit einer nach hinten offenen axialen Ausnehmung ausgebildet ist. Dies hat den Vorteil, dass für die Unterbringung des Drehlagesensors mit dem Polring kein zusätzlicher Raumbedarf und keine Vergrößerung der axialen Baulänge der Maschine erforderlich ist, dass eine thermisch günstige Anbringung erfolgt und dass enge Fertigungstoleranzen bezüglich des Arbeitsluftspaltes der Sensoranordnung ohne großen zusätzlichen Aufwand möglich sind. Da die Magnetfeld-verteilung des Polringes nunmehr unabhängig vom Streufeld des Läufers ist, wird zweckmäßigerweise der Polring mit einer gleichmäßigen Polteilung versehen. Um den Aufnehmer mit den Sensorelementen am Umfang des Lagerschildes der Maschine exakt positionieren zu können, wird vorgeschlagen, den Aufnehmer in einer Aussparung am Lagerschild der elektrischen Maschine zu befestigen. Dabei wird der Aufnehmer zweckmäßigerweise mit Schultern auf radiale Zentrierflächen an der Aussparung am Lagerschild zentriert. Außerdem ist zur exakten Zuordnung der Permanetmagnete des Polringes zu den Läuferpolen der Maschine die Riemenscheibe in einer vorgegebenen Winkelstellung zu den Polen des Läufers auf der Läuferwelle fixiert.

Alternativ zu den engen Abmessungen der Ausnehmung des Jochringes ist es zur Erzielung eines guten magnetischen Rückschlusses auch möglich, auf der dem Polrad gegenüberliegenden axialen Wandung der Ausnehmung einen weichmagnetischen Rückschlussring anzubringen, so dass dann der Aufnehmer mit den Sensorelementen mit jeweils geringem Luftspalt zwischen dem Polring und dem Rückschlussring in die Ausnehmung axial hineinragt. Ferner ist es auch möglich, den Aufnehmer zumindest im Bereich der Sensorelemente aus einem magnetisch leitenden Material herzustellen, um die Flussdichte in den Sensorelementen zu erhöhen. Alternativ zu der Anbringung des Polringes an der äußeren axialen Wandung der Ausnehmung kann dieser auch auf der inneren axialen Wandung befestigt werden mit entsprechend geringerem Materialaufwand für den Polring. Außerdem kann der Polring auch am Boden der Ausnehmung befestigt werden, sofern die Ausnehmung tief genug ist, um die dann dicht vor der Stirnseite des Polrings anzuordnenden Sensorelemente vollständig aufzunehmen. In diesem Fall ist der Polring mit seinen Permanetmagneten abwechselnder Polarität axial zu magnetisieren. Die Anbringung der Sensoranordnung auf der Antriebsseite, insbesondere an der Riemenscheibe hat den Vorteil, dass sie dort gegen Umwelteinflüsse, mechanischer Beschädigung und Temperaturbeanspruchung gut geschützt ist, zumal die elektrische Maschine auf der Antriebsseite üblicherweise die geringste Betriebstemperatur hat.

Drehlagesensor und Jochring können aber auch auf der hinteren Stirnseite der Maschine innerhalb oder außerhalb des Lagerschildes angeordnet sein, da auch hier durch den Jochring die magnetischen Streufelder des Läufers vom Polrad und von den Sensorelementen fern gehalten werden. Da dort üblicherweise ein Lüfterrad vorhanden ist, ist auch eine ausreichende Belüftung und Kühlung vorhanden.

Bei der Verwendung sogenannter Absolut-Hallsensoren kann nach dem Einschalten der Vorsorgungsspannung immer sicher erkannt werden, ob sich gerade ein Nordpol oder ein Südpol vor dem jeweiligen Sensorelement befindet. Verwendet man drei um jeweils 120° elektrisch zueinander versetzte Sensorelemente, so lässt sich damit für eine Dreiphasen-Ständerwicklung die Stellung des Polrades im Stillstand in einem elektrischen Winkelbereich von 60° detektieren. Bei engen Raumverhältnissen oder sehr hoher Polzahl können dabei die Sensorelemente um zusätzliche 360° elektrisch oder ein Vielfaches davon zueinander versetzt angeordnet sein, so dass der relative Abstand zueinander weiterhin 120° elektrisch beträgt. Will man eine genauere Drehlage der Läuferpole detektieren, können anstatt dreier um 120° elektrisch zueinander versetzter Sensorelemente beispielsweise sechs um jeweils 60° elektrisch zueinander versetzte Sensorelemente verwendet werden. Damit lässt sich die Drehlage im Stillstand über einen Winkel von 30° elektrisch bestimmen. In jedem Fall wird aber beim Andrehen des Motors mit dem ersten Magnetfeldwechsel an einem der Sensorelemente ein Signalwechsel an diesem Sensorelement erfolgen, mit dem sich in Verbindung mit den Signalen der übrigen Sensorelemente exakt die Drehlage der Läuferpole zu der Statorwicklung ermitteln lässt, so dass spätestens dann die Maschine vom Wechselrichter mit maximaler elektrischer Energie zum Andrehen der Brennkraftmaschine eingeschaltet werden kann.

### Zeichnung

Die Erfindung wird im Folgenden beispielhaft anhand der Figuren näher erläutert. Es zeigen:
Figur 1 einen erfindungsgemäß ausgebildeten Starter-Generator für Kraftfahrzeuge im Längsschnitt,
Figur 2 den Drehlagesensor mit Aufnehmer und Polrad in Vorderansicht in vergrößerter, schematischer Darstellung,
Figur 3 zeigt einen Ausschnitt des vorderen Lagerschildes der Maschine (a) im Längsschnitt und (b) in der Draufsicht,
Figur 4 den Aufnehmer des Drehlagesensors (a) im Längsschnitt und (b) in Vorderansicht,
Figur 5 zeigt das vordere Lagerschild mit montiertem Aufnehmer (a) im Längsschnitt und (b) in Vorderansicht.
Figur 6 zeigt ein Diagramm mit dem Signalverlauf der Sensorelemente des Drehlagesensors in Abhängigkeit vom Drehwinkel,
Figur 7 zeigt einen vergrößerten Ausbruch der Anordnung des Drehlagesensors an der Riemenscheibe (a) mit breiter Ausnehmung (b) mit enger Ausnehmung und
Figur 8 zeigt ein Diagramm mit der magnetischen Flussdichte an den Sensorelementen über einen Umfangswinkel von 360° elektrisch.

### Beschreibung der Ausführungsbeispiele

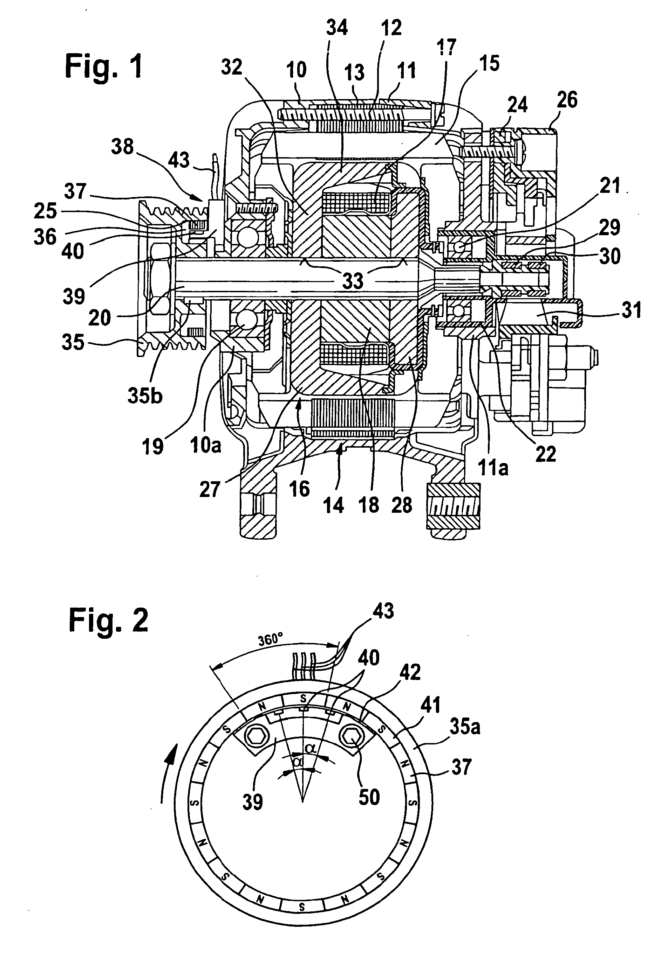

Die Figur 1 zeigt einen Starter-Generator für Kraftfahrzeuge im Längsschnitt, dessen Gehäuse im wesentlichen aus zwei Lagerschilden 10 und 11 besteht, die durch Schrauben 12 zusammengehalten sind und zwischen denen das Blechpaket 13 eines Ständers 14 eingespannt ist. In den Nuten des Blechpaketes 13 ist eine dreiphasige Ständerwicklung 15 angeordnet. Innerhalb der Ständerbohrung befindet sich ein Klauenpolläufer 16, dessen Erregerwicklung 17 auf einem Polkern 18 sitzt. Auf der linken Antriebsseite der Maschine ist im Lagerschild 10 eine Nabe 10a ausgebildet, in der ein Kugellager 19 zur Lagerung des antriebsseitigen Teiles einer Läuferwelle 20 angeordnet ist. Der rechte Teil der Läuferwelle 20 ist in einem schwächer ausgebildeten Kugellager 21 aufgenommen, welches zusammen mit einer Schleifringkapsel 22 in einer Nabe 11a des Lagerschildes 11 angeordnet ist. An der Stirnseite des hinteren Lagerschildes 11 ist eine Gleichrichter-Baueinheit 24 gemeinsam mit einer Schutzkappe 26 befestigt. Stirnseitig am Polkern 17 ist ein erster und zweiter Klauenpol 27, 28 auf der Läuferwelle 20 aufgepresst beziehungsweise verstemmt. Zur elektrischen Versorgung der Erregerwicklung 17 sind am hinteren Wellenende zwei Schleifringe 29, 30 isoliert befestigt, die mit den Bürsten eines am hinteren Lagerschild 11 befestigten Bürstenhalters 31 zusammenwirken. Die Klauenpole 27 und 28 sind aus Polplatinen durch Kaltverformung hergestellt worden. Sie bestehen jeweils aus einer Polscheibe 32 mit einem zentrisch eingestanzten Loch 33 und über den Umfang gleichmäßig verteilt axial abgewinkelten, ineinander greifenden Klauenpolfingern 34.

Am antriebsseitigen Ende der Läuferwelle 20 ist eine Riemenscheibe 35 befestigt, die an ihrem hinteren Abschnitt eine axiale Ausnehmung 36 aufweist. Die Ausnehmung 36 ist nach hinten zur Stirnseite des Lagerschildes 10 hin offen und trägt an ihrer äußeren axialen Wandung 25 einen Polring 37, der eine Vielzahl radial magnetisierter Segmente mit abwechselnder Polarität aufweist. Dieser Polring 37 bildet den umlaufenden Teil eines Drehlagesensorsystems 38, dessen ruhender Teil aus einem an der Stirnseite des vorderen Lagerschildes 10 befestigten Aufnehmer 39 mit mehreren magnetfeldabhängigen Sensorelementen 40 besteht, welche in die Ausnehmung 36 axial hinein ragen und dort über einen Luftspalt dem Polring 37 gegenüber liegen. Der hintere Abschnitt der Riemenscheibe 35 bildet dabei für die Permanentmagnete des Polrings 37 einen weichmagnetischen Jochring 35a zum magnetischen Rückschluss. Er bewirkt außerdem eine Abschirmung der axialen Ausnehmung 36 gegenüber dem magnetischen Streufeld des Klauenpolläufers 16, das von der vorderen Polscheibe 32 des Klauenpolläufers 16 über die Läuferwelle 20 in die aus weichmagnetischem Material hergestellte Riemenscheibe 35 eintritt und über den als Jochring 35a ausgebildeten hinteren Abschnitt der Riemenscheibe 35 in das Lagerschild 10 gelangt.

Figur 2 zeigt in schematischer Darstellung das Drehlagesensorsystem 38 in der Vorderansicht. Bei einem Klauenpolläufer mit sechzehn Polen ist dementsprechend auch der am Jochring 35a befestigte Polring 37 mit sechzehn radial magnetisierten Permanentmagneten 41 abwechselnder Polarität versehen. Dicht unterhalb der Innenseite des Polringes 37 sind drei Sensorelemente 40 an dem Aufnehmer 39 nebeneinander angeordnet. Da jedes Polpaar des Polrings 37 einem elektrischen Winkel ϕ von 360° entspricht, sind die drei Sensorelemente 40 zueinander um den elektrischen Winkel α von 120° versetzt. Dies entspricht dem Winkel, den auch die drei Phasen der Ständerwicklung 15 bezogen auf ein Polpaar des Klauenpolläufers 16 zueinander versetzt sind. Als Sensorelemente 40 sind hier drei Absolut-HALL-Sensorelemente vorgesehen, die über einen Luftspalt 42 den Permanentmagneten 41 gegenüber liegen und von deren Magnetfelder durchsetzt werden und deren radiale, senkrechte Komponente erfassen. Über den am Lagerschild 10 befestigten Aufnehmer 39 werden die Sensorelemente 40 elektrisch versorgt und über je eine Signalleitung 43 werden die Ausgangssignale der Sensorelemente 40 einer nicht dargestellten Auswerteschaltung zur Ermittlung der Drehlage des Klauenpolläufers 16 zugeführt. Dabei wird die Riemenscheibe 35 auf der Läuferwelle 20 durch eine formschlüssige Verbindung, zum Beispiel durch eine Passfeder 35b derart fixiert, dass die Polpaare des mit gleichmäßiger Polteilung versehenden Polrings in gleicher Weise den Sensorelementen 40 gegenüberstehen, wie die Polpaare des Klauenpolläufers 16 den drei Phasen der Ständerwicklung 15.

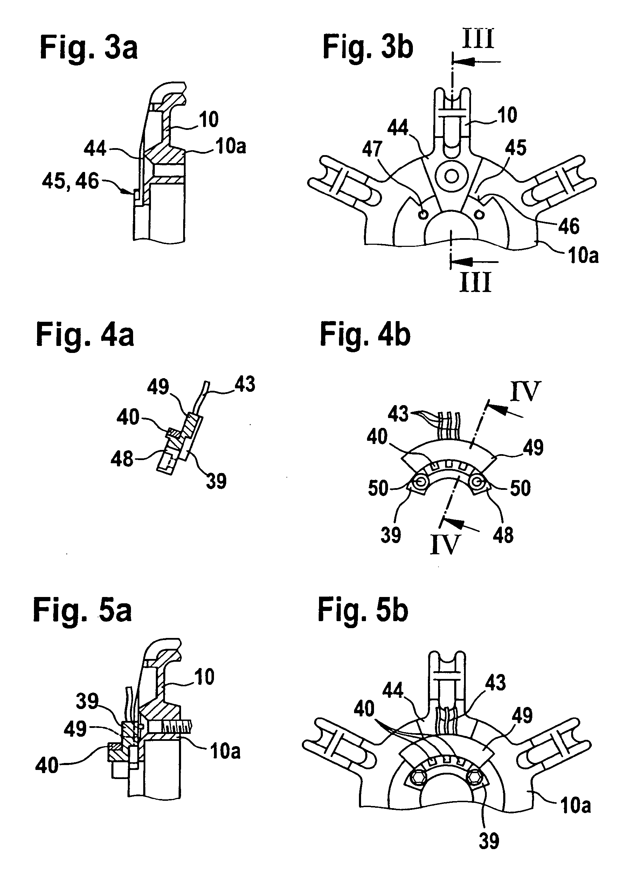

In Figur 3a und 3b ist ein Ausbruch des vorderen Lagerschildes 10 im Längsschnitt nach der Linie III-III aus Figur 3b und in der Draufsicht dargestellt. Dort ist erkennbar, dass das Lagerschild 10 auf seiner vorderen Stirnseite zur Montage des Aufnehmers 39 des Drehlagesensors 38 in ihrer Nabe 10a eine radiale Aussparung 44 aufweist. Ferner sind am Lagerschild 10 beiderseits der Aussparung 44 radiale Zentrierflächen 45 vorgesehen, die in Umfangsrichtung verlaufende Zentrierschultern 46 haben. Unterhalb der Zentrierschultern 46 befinden sich zwei Gewindebohrungen 47 zur Befestigung des Aufnehmers 39.

Die Figuren 4a und 4b zeigen den Aufnehmer 39 im Längsschnitt nach der Linie IV-IV aus Figur 4b sowie in der Draufsicht. Der Aufnehmer 39 besteht hier aus einem Kunststoffspritzteil. Die Sensorelemente 40 sind dabei an der oberen Umfangsfläche einer axial vorstehenden segmentartig ausgebildeten Konsole 48 eingebettet. Die Versorgungs- und Signalleitungen 43 der Sensorelemente 40 sind ebenfalls im Material des Aufnehmers 39 eingebettet und radial nach außen weggeführt. Zur Zentrierung des Aufnehmers 39 am Lagerschild 10 ist der Aufnehmer ferner mit einem Zentrierkragen 49 versehen und zur Befestigung sind an der Konsole 48 unterhalb der Sensorelemente 40 zwei Befestigungsbohrungen 50 vorgesehen.

Die Figuren 5a und 5b zeigen den Ausbruch des vorderen Lagerschildes nach Figur 3 mit dem montierten Aufnehmer 39 nach Figur 4 im Längsschnitt beziehungsweise in der Draufsicht. Dabei liegt der Zentrierkragen 49 des Aufnehmers 39 an den Zentrierflächen 45 und den Zentrierschultern 46 des Lagerschildes 10 an. Dadurch wird gewährleistet, dass die Position der Sensorelemente 40 und der Phasen der Ständerwicklung 15 in ihrer Winkellage zueinander genau vorgegeben ist.

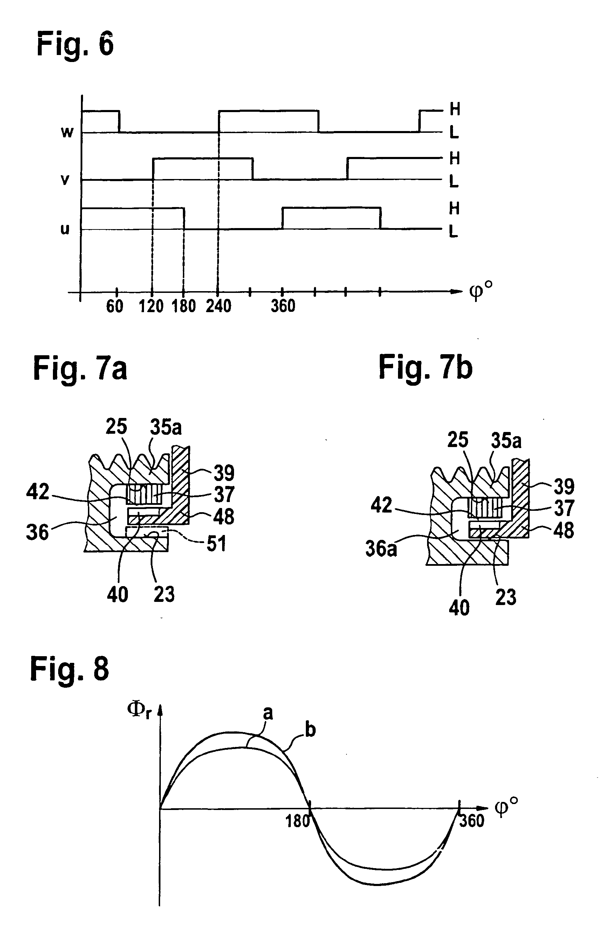

Die Wirkungsweise des Drehlagesensorsystems 38 zur Bestimmung der Drehlage des Klauenpolläufers 16 wird mit Figur 6 im Folgenden näher erläutert. Dort sind in einem Diagramm die von den drei Sensorelementen 40 an die Signalleitungen 43 abgegebenen Signalverläufe in Abhängigkeit vom elektrischen Drehwinkel ϕ der Polpaare des Polrings 37 dargestellt. Das erste Sensorelement gibt dabei den Signalverlauf der Phase u, das zweite den Signalverlauf der Phase v und das dritte Sensorelement den Signalverlauf der Phase w ab. In der dargestellten Ausgangslage tritt zunächst in der Phase u ein High-Signal auf, in dem beispielsweise gemäß Figur 2 dem ersten, linken Sensorelement 40 ein Nordpol des Polringes 37 gegenüber steht. Nach 180° elektrischer Drehung des Polringes in Pfeilrichtung gelangt der nachfolgende Südpol des Polrings 37 oberhalb des linken Sensorelementes 40 und bewirkt dort eine Flussrichtungsänderung, durch die das Ausgangssignal von High auf Low umgeschaltet wird. Nach weiteren 180° elektrischer Drehung folgt ein weiterer Nordpol, so dass nunmehr das Ausgangssignal für weitere 180° elektrisch auf High umgeschaltet wird. An der Phase v des mittleren Sensorelementes 40 tritt entsprechend dem Versetzungswinkel α ein entsprechend um 120° elektrisch versetzter Signalverlauf von High- und Low-Signalen auf. Demzufolge tritt auch an der Phase w des linken Sensorelementes 40 ein um weitere 120° elektrisch versetzter Signalverlauf auf. In einer Auswerteschaltung werden diese statischen Sensorsignale logisch ausgewertet. Da sich hierbei durch die gleich breiten Nord- und Südpole des Polrings 37 exakt nach jeweils 60° elektrischem Drehwinkel eines der drei Ausgangssignale ändert, lässt sich in der Ruhelage die Position des Klauenpolläufers 16 nur innerhalb eines Winkelbereichs von maximal 60° elektrisch ermitteln, so dass beispielsweise im Motorbetrieb der elektrischen Maschine die Ständerwicklung 15 zunächst nur mit einer geringeren Stromstärke vom Wechselrichter versorgt wird. Mit der ersten Signaländerung an einem der drei Sensorelemente nach maximal 60° elektrisch erfasst sodann die Auswerteschaltung die exakte Position des Klauenpolläufers 16, so dass spätestens dann die volle Stromstärke der Ständerwicklung 15 zum Andrehen der Brennkraftmaschine zur Verfügung gestellt werden kann.

Da die im Ausführungsbeispiel verwendeten Absolut-HALL-Sensorelemente 40 auf Änderungen der magnetischen Feldstärke ansprechen, ist es wichtig, dass bei einem Polwechsel am Sensorelement eine möglichst große Feldstärkeänderung im Sensorelement auftritt. Zu diesem Zweck ist der Luftspalt der Sensorelemente zum magnetischen Rückschluss des Jochringes 35a möglichst klein zu halten. Während in Figur 7a die Anordnung des Polrings 27 und der Sensorelemente 40 in der Ausnehmung 36 nach Figur 1 in vergrößerter Darstellung zeigt, ist nach Figur 7b die Höhe der Ausnehmung 36a kleiner gewählt, so dass der Aufnehmer 39 mit seiner Konsole 48 und den Sensorelementen 40 dicht oberhalb der inneren axialen Wandung 23 der Ausnehmung 36a liegt.

Figur 8 zeigt dazu über den Drehwinkel ϕ von 360° elektrisch die radiale Komponente der magnetischen Flussdichte φr an den Sensorelementen. Gegenüber dem Flussverlauf a bei einer Ausführung nach Figur 7a wird durch den verbesserten magnetischen Rückschluss gemäß Figur 7b eine deutlich höhere magnetische Flussdichte φr gemäß dem Verlauf b erzielt.

Dabei kann anstelle einer kleineren Ausnehmung 36a gemäß Figur 7b der magnetische Rückschluss auch durch einen Rückschlussring 51 um etwa 30% verbessert werden, der - wie in Figur 7a gestrichelt angedeutet - auf der inneren axialen Wandung 23 der Ausnehmung 36 zu befestigen ist.

Anstelle von HALL-Sensoren können hier auch AMR-Sensoren (Anisotrop-Magnetic-Resistance) oder GMR-Sensoren (Giant-Magnetic-Resistance) verwendet werden. Wesentlich ist dabei jedoch, dass der magnetische Kreis, bestehend aus dem magnetisierten Polring 37 und dem weichmagnetischen Jochring 35a so mit den magnetischen Schaltschwellen der Sensorelemente abgestimmt ist, dass unabhängig von magnetischen Störfeldern nach dem Einschalten der Versorgungsspannung immer sicher erkannt werden kann, ob sich gerade ein Nordpol oder ein Südpol vor dem jeweiligen Sensorelement befindet und somit die elektrische Lage detektierbar ist (True Power On).

## Patentansprüche

1. Mehrphasige elektrische Maschine, insbesondere Starter-Generator für Brennkraftmaschinen, mit einem eine mehrphasige Wicklung (15) tragenden Ständer (14) und einem vielpoligen, auf einer Läuferwelle (20) befestigten Läufer, insbesondere Klauenpolläufer (16), dessen Drehwinkellage zum Ständer innerhalb eines durch die Polpaare des Läufers vorgegebenen elektrischen Winkels (ϕ) von 360° von einem Drehlagesensorsystem (38) zu ermitteln ist, das einen mit der Läuferwelle umlaufenden Polring (37) aufweist, dessen Polzahl der Polzahl des Läufers entspricht und der mit einem mehrere magnetfeldabhängige Sensorelemente (40) aufweisenden ortsfesten Aufnehmer (39) über einen kleinen Luftspalt (42) zusammenwirkt, wobei die Sensorelemente zueinander in Umfangsrichtung versetzt sind, wobei der Aufnehmer (39) mit seinen Sensorelementen (40) in eine axiale Ausnehmung (36) eines mit der Läuferwelle (20) umlaufenden weichmagnetischen Jochringes (35a) derart axial hineinragt, dass die Sensorelemente (40) über den Luftspalt (42) dem am Jochring (35a) befestigten Polring (37) innerhalb der Ausnehmung (36) gegenüber liegen, **dadurch gekennzeichnet, dass** die Maschine eine Riemenscheibe aufweist und dass der Jochring (35a) durch einen Abschnitt der Riemenscheibe (35) gebildet ist.

2. Elektrische Maschine nach Anspruch 1, **dadurch gekennzeichnet, dass** die Sensorelemente (40) auf die Erfassung radialer Magnetfeldkomponenten ausgerichtet sind, wobei der Polring (37) an einer axialen Wandung (25) der Ausnehmung (36) befestigt ist und radial magnetisierte Permanentmagnete (41) abwechselnder Polarität aufweist.

3. Elektrische Maschine nach Anspruch 2, **dadurch gekennzeichnet, dass** der Polring (37) an der äußeren axialen Wandung (25) der Ausnehmung (36) befestigt ist, wobei vorzugsweise drei nebeneinander am Aufnehmer (39) befestigte, um 120° elektrisch zueinander versetzte Sensorelemente (40) dicht unterhalb der Innenseite des Polringes (37) angeordnet sind.

4. Elektrische Maschine nach Anspruch 3, **dadurch gekennzeichnet, dass** die Sensorelemente (40) von Magnetfeldärtderungen abhängige Sensorelemente, vorzugsweise Absolut-HALL-Sensorelemente sind.

5. Elektrische Maschine nach Anspruch 4, **dadurch gekennzeichnet, dass** die Höhe der Ausnehmung (36a) für den magnetischen Rückschluss so bemessen ist, dass der Aufnehmer (39) mit den Sensorelementen (40) dicht oberhalb der inneren axialen Wandung (23) angeordnet ist.

6. Elektrische Maschine nach einem der vorherigen Ansprüche, **dadurch gekennzeichnet, dass** der hintere Abschnitt (35a) einer auf die Läuferwelle (20) aufsetzbaren Riemenscheibe (35) als Jochring mit einer nach hinten offener axialer Ausnehmung (36) ausgebildet ist.

7. Elektrische Maschine nach einem der vorherigen Ansprüche, **dadurch gekennzeichnet, dass** der Polring (37) eine gleichmäßige Polteilung aufweist.

8. Elektrische Maschine nach einem der vorherigen Ansprüche, **dadurch gekennzeichnet, dass** der Aufnehmer (39) in einer Aussparung (44) am Lagerschild (10) der elektrischen Maschine befestigt ist.

9. Elektrische Maschine nach Anspruch 8, **dadurch gekennzeichnet, dass** der Aufnehmer (39) mit einem Zentrierkragen (49) auf radiale Zentrierschultern (46) und Zentrierflächen (45) zu beiden Seiten der Aussparung (44) am Lagerschild (10) zentriert ist.

10. Elektrische Maschine nach Anspruch 6, **dadurch gekennzeichnet, dass** die Riemenscheibe (35) in einer vorgegebenen Winkelstellung zu den Polen des Läufers (16) auf der Läuferwelle (20) fixiert, insbesondere formschlüssig befestigt ist.

## Claims

1. Polyphase electrical machine, in particular starter generator for internal combustion engines, comprising a stator (14), which has a polyphase winding (15), and a multi-pole rotor, in particular a claw-pole rotor (16), which is mounted on a rotor shaft (20) and whose rotary angle position in relation to the stator can be determined within an electrical angle (ϕ), which is prespecified by the pole pairs of the rotor, of 360° by a rotary position sensor system (38) which has a pole ring (37) which rotates with the rotor shaft and whose number of poles corresponds to the number of poles of the rotor and which interacts with a stationary pick-up (39), which has a plurality of magnetic field-dependent sensor elements (40), via a small air gap (42), with the sensor elements being offset in relation to one another in the circumferential direction, with the pick-up (39) axially protruding into an axial recess (36) in a soft-magnetic yoke ring (35a), which rotates with the rotor shaft (20), by way of its sensor elements (40) in such a way that the sensor elements (40) are situated opposite the pole ring (37), which is attached to the yoke ring (35a), within the recess (36) via the air gap (42), **characterized in that** the machine has a pulley disc, and **in that** the yoke ring (35a) is formed by a section of the pulley disc (35).

2. Electrical machine according to Claim 1, **characterized in that** the sensor elements (40) are directed at detecting radial magnetic field components, with the pole ring (37) being attached to an axial wall (25) of the recess (36) and having radially magnetized permanent magnets (41) of alternating polarity.

3. Electrical machine according to Claim 2, **characterized in that** the pole ring (37) is attached to the outer axial wall (25) of the recess (36), with preferably three sensor elements (40), which are attached to the pick-up (39) next to one another and are offset electrically in relation to one another through 120°, being arranged right underneath the inner face of the pole ring (37).

4. Electrical machine according to Claim 3, **characterized in that** the sensor elements (40) are sensor elements, preferably absolute Hall sensor elements, which are dependent on changes in magnetic field.

5. Electrical machine according to Claim 4, **characterized in that** the height of the recess (36a) for the magnetic return is such that the pick-up (39) comprising the sensor elements (40) is arranged right above the inner axial wall (23).

6. Electrical machine according to one of the preceding claims, **characterized in that** the rear section (35a) of a pulley disc (35), which can be fitted on the rotor shaft (20), is in the form of a yoke ring with an axial recess (36) which is open at the rear.

7. Electrical machine according to one of the preceding claims, **characterized in that** the pole ring (37) has a uniform pole pitch.

8. Electrical machine according to one of the preceding claims, **characterized in that** the pick-up (39) is mounted in a cutout (44) in the mounting plate (10) of the electrical machine.

9. Electrical machine according to Claim 8, **characterized in that** the pick-up (39) is centred by way of a centring collar (49) on radial centring shoulders (46) and centring faces (45) on both sides of the cutout (44) in the mounting plate (10).

10. Electrical machine according to Claim 6, **characterized in that** the pulley disc (35) is fixed, in particular mounted in an interlocking manner, on the rotor shaft (20) at a prespecified angular position in relation to the poles of the rotor (16).

## Revendications

1. Machine électrique polyphasée, notamment démarreur-générateur pour des moteurs à combustion interne comprenant
un stator (14) portant un enroulement polyphasé (15) et un rotor, notamment un rotor à griffes (16), multipolaire, fixé sur un arbre de rotor (20), et dont l'angle de rotation par rapport au stator se détermine dans un angle électrique (ϕ) de 360° prédéfini par les paires polaires du rotor, par un système de capteur de position de rotation (38), ayant une bague polaire (37) tournant avec le rotor dont le nombre de pôles correspond au nombre de pôles du rotor et coopérant à travers un petit entrefer (42) avec un capteur (39) fixe, ayant plusieurs éléments de capteur (40) magnéto-sensibles,
les éléments de capteur étant décalés les uns par rapport aux autres dans la direction périphérique,
le capteur (39) et ses éléments de capteur (40) pénétrant axialement dans une cavité axiale (36) d'une bague d'étrier (35a) à aimantation douce tournant avec l'arbre de rotor (20) de façon que les éléments de capteur (40) se trouvent en regard par l'intermédiaire de l'entrefer (42) de la bague polaire (37) fixée à la bague d'étrier (35a) dans la cavité (36),
**caractérisée en ce que**
la machine comporte une poulie à courroie et
la bague d'étrier (35a) est formée par un segment de la poulie (35).

2. Machine électrique selon la revendication 1,
**caractérisée en ce que**
les éléments de capteur (40) sont alignés pour saisir des composantes radiales de champ magnétique,
la bague polaire (37) étant fixée dans une paroi axiale (25) de la cavité (36) et les aimants permanents (41) à aimantation radiale sont de polarité alternée.

3. Machine électrique selon la revendication 2,
**caractérisée en ce que**
la bague polaire (37) est fixée à la paroi axiale extérieure (25) de la cavité (36), et de préférence trois éléments de capteur (40) décalés électriquement de 120° sont fixés les uns à côté des autres sur un support (39), directement sous le côté intérieur de la bague polaire (37).

4. Machine électrique selon la revendication 3,
**caractérisée en ce que**
les éléments de capteur (40) sont des éléments de capteur magnéto-sensibles, de préférence des éléments de capteur Hall, absolus.

5. Machine électrique selon la revendication 4,
**caractérisée en ce que**
la hauteur de la cavité (36a) pour le court-circuit magnétique est dimensionnée pour que le capteur (39) avec les éléments de capteur (40) se trouvent directement au-dessus de la paroi axiale intérieure (23).

6. Machine électrique selon l'une des revendications précédentes,
**caractérisée en ce que**
le segment arrière (35a) d'une poulie à courroie (35) installée sur l'arbre de rotor (20) est réalisée comme bague d'étrier ayant une cavité (36) axiale ouverte vers l'arrière.

7. Machine électrique selon l'une des revendications précédentes,
**caractérisée en ce que**
la bague polaire (37) a une répartition polaire régulière.

8. Machine électrique selon l'une des revendications précédentes,
**caractérisée en ce que**
le capteur (39) est fixé dans une cavité (44) du panneau de palier (10) de la machine électrique.

9. Machine électrique selon la revendication 8,
**caractérisée en ce que**
le capteur (39) est centré sur le panneau de palier (10) par une collerette de centrage (49) sur des épaulements de centrage (46) radiaux et des surfaces de centrage (45) des deux côtés de la cavité (44).

10. Machine électrique selon la revendication 6,
**caractérisée en ce que**
la poulie à courroie (35) est fixée dans une position angulaire prédéfinie par rapport au pôle du rotor (16) sur l'arbre de rotor (20), notamment par une fixation réalisée par une liaison par la forme.
